# EUROPEAN PATENT APPLICATION

(11) **EP 4 116 340 A1**
(43) Date of publication of application: **11.01.2023**
(21) Application number: 21764970.6
(22) Date of filing: 01.03.2021
(51) Int. Cl.: C08F 8/00, C08F 220/36, G01N 29/02

(54) **COPOLYMER, METHOD FOR PRODUCING SAME, MEASUREMENT DEVICE, AND MEASUREMENT CARRIER**

(30) Priority: 02.03.2020 JP 2020035380
(71) Applicant: Kyocera Corporation, Kyoto-shi Kyoto 612-8501 (JP)
(72) Inventor: ANDO, Tsuyoshi, Ikoma-shi, Nara 630-0192 (JP); MURASE, Nobuo, Ikoma-shi, Nara 630-0192 (JP); KURIOKA, Hideharu, Kyoto-shi, Kyoto 612-8501 (JP)
(74) Representative: TBK
(86) International application number: PCT/JP2021/007608
(87) International publication number: WO 2021/177201

(57) **Abstract**

The copolymer of the present disclosure comprises a first structural unit represented by Formula (1) and a second structural unit represented by Formula (2). In Formula (1), R¹ is a hydrogen atom or a methyl group. R² and R³ are each independently a hydrogen atom or an alkyl group having from 1 to 4 carbons. x1 is an integer of 1 to 4.

In Formula (2), R⁴ is a hydrogen atom or a methyl group. R⁵ and R⁶ are each independently a hydrogen atom or an alkyl group having from 1 to 4 carbons. x2 is an integer of 1 to 4, and y is an integer of 3 to 7.

## Description

### TECHNICAL FIELD

The present disclosure relates to a copolymer forming a polymer film used in a measurement device, a method for producing the copolymer, and a measurement device and measurement carrier including the polymer film.

### BACKGROUND OF INVENTION

Patent Document 1 describes a surface acoustic wave sensor as an example of a measurement device for measuring a concentration of a measurement target substance (e.g., biomolecule). Such a measurement device includes a detector to which a substance (e.g., antibody) is fixed to interact with a measurement target substance contained in a sample. The detector often includes a polymer film to fix the substance interacting with a measurement target substance contained in a sample.

### CITATION LIST

### PATENT LITERATURE

Patent Document 1: JP 2008-286606A

### SUMMARY

### PROBLEM TO BE SOLEVED

The polymer film formed in the detector of the measurement device needs to fix the interacting substance described above and to have high chemical stability.

In an embodiment, a copolymer contains a first structural unit represented by Formula (1) and a second structural unit represented by Formula (2). 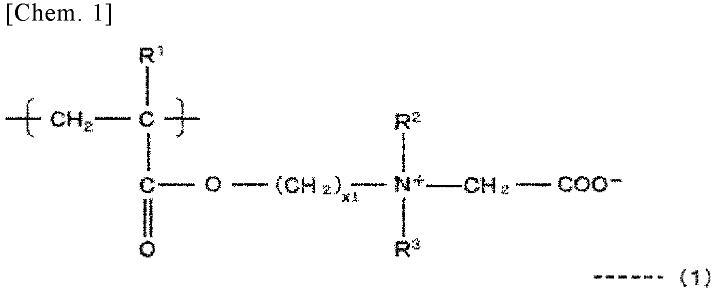 In Formula (1),
R¹ is a hydrogen atom or a methyl group;
R² and R³ are each independently a hydrogen atom or an alkyl group having from 1 to 4 carbons; and
x1 is an integer of 1 to 4. 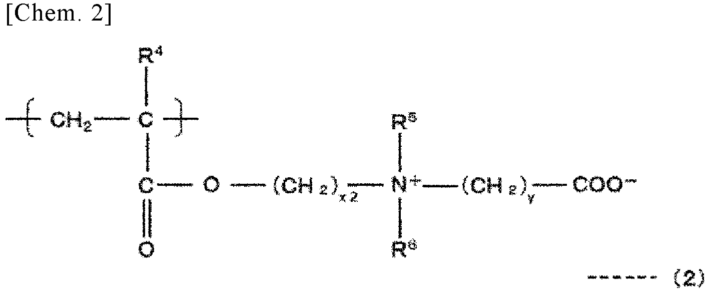
In Formula (2),
R⁴ is a hydrogen atom or a methyl group;
R⁵ and R⁶ are each independently a hydrogen atom or an alkyl group having from 1 to 4 carbons; and
x2 is an integer of 1 to 4, and y is an integer of 3 to 7.

In an embodiment, a method is for producing a copolymer containing a first structural unit represented by Formula (1) and a second structural unit represented by Formula (2). 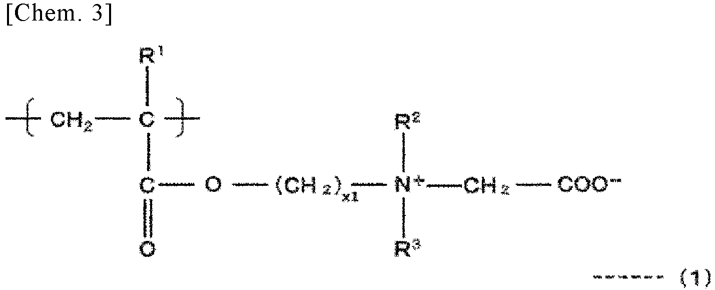 In Formula (1),
R¹ is a hydrogen atom or a methyl group;
R² and R³ are each independently a hydrogen atom or an alkyl group having from 1 to 4 carbons, and
x1 is an integer of 1 to 4. 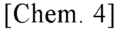 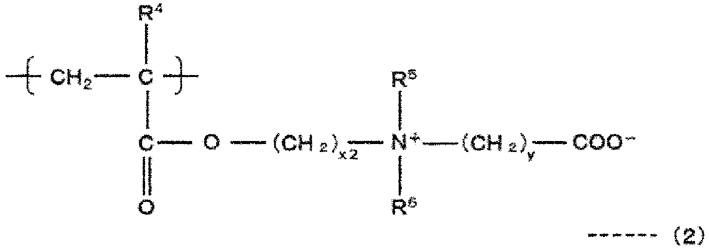
In Formula (2),
R⁴ is a hydrogen atom or a methyl group;
R⁵ and R⁶ are each independently a hydrogen atom or an alkyl group having from 1 to 4 carbons; and
x2 is an integer of 1 to 4, and y is an integer of 3 to 7.

The method includes
reacting a polymer containing a structural unit represented by Formula (3) with a compound represented by Formula (4) and a compound represented by Formula (5). 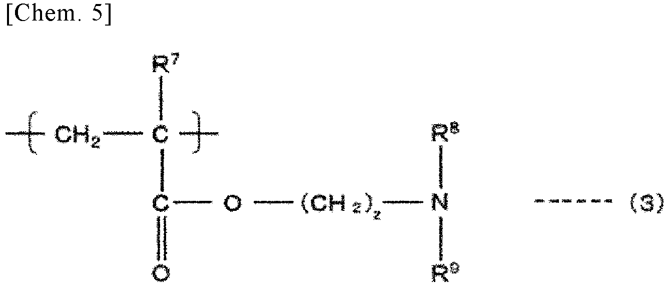 In Formula (3),
R⁷ is a hydrogen atom or a methyl group;
R⁸ and R⁹ are each independently an alkyl group having from 1 to 4 carbons; and z is an integer of 1 to 4. 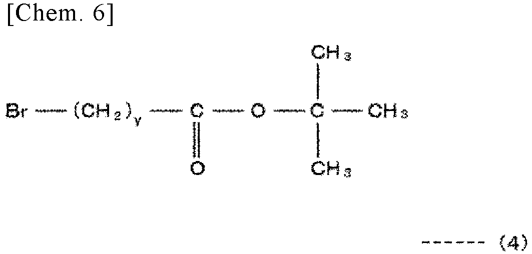
In Formula (4), y is an integer of 3 to 7.

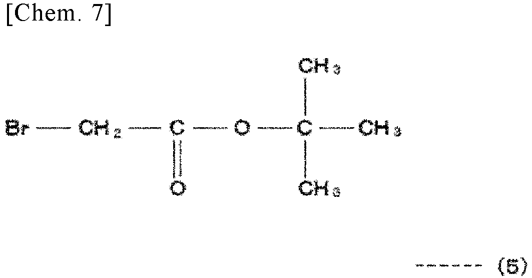

The reacting includes reacting the polymer containing the structural unit represented by Formula (3) with the compound represented by Formula (4) and then with the compound represented by Formula (5).

### BRIEF DESCRIPTION OF THE DRAWINGS

FIG. 1 is a schematic view illustrating an example of a measurement device according to an embodiment of the present disclosure.
FIG. 2 is a plan view illustrating a sensor included in the measurement device.
FIG. 3 is a schematic diagram illustrating a polymer included in a detector 23 illustrated in FIG. 1.
FIG. 4 is a plan view illustrating an example of a measurement carrier according to the present disclosure.
FIG. 5 is a graph showing the measurement result of TG profile of each polymer in Reference Example 1.
FIG. 6 is a graph showing a relationship between a degree of polymerization of a copolymer according to an embodiment of the present disclosure and an amount of non-specific adsorption.
FIG. 7 is a graph showing a relationship between a proportion of CBMA1 in the copolymer and an amount of immobilized antibody.
FIG. 8 is a graph showing a relationship between a proportion of CBMA1 in the copolymer and an amount of non-specific adsorption of a component contained in serum.

### DESCRIPTION OF EMBODIMENTS

### First Embodiment

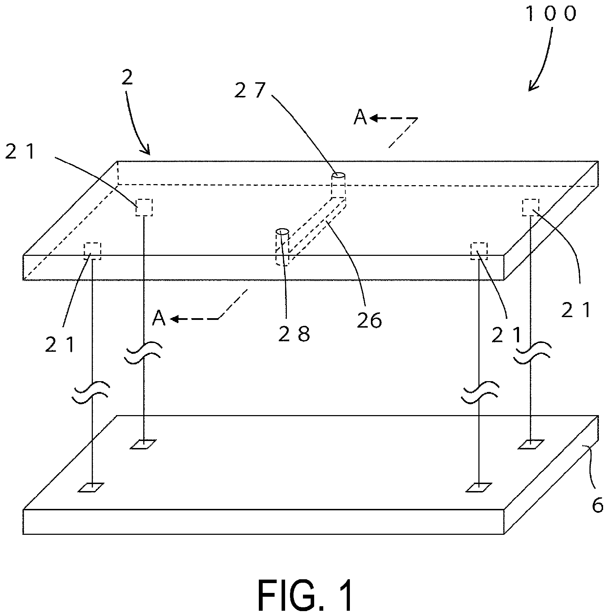

A sensor included in a measurement device according to an embodiment of the present disclosure will be described below by using the drawings appropriately. FIG. 1 schematically illustrates a sensor 2 of a measurement device 100 according to the present embodiment.

The measurement device 100 can detect, as a target, a specific substance (first substance) in a measurement target (sample). The first substance 5 is, for example, a substance in a living body. Examples of such a substance in a living body include proteins, DNA, and substrates for enzymatic reactions. The measurement device 100 includes a sensor 2 configured to detect the first substance and a control device 6 configured to control the measurement device 100.

The sensor 2 is only required to utilize, for example, elastic wave, quartz crystal microbalance (QCM), surface plasmon resonance (SPR), or field effect transistor (FET). That is, the sensor 2 is only required to interconvert an electrical signal and elastic wave, QCM, SPR, FET, or the like. In an embodiment, the sensor 2 utilizes an elastic wave. That is, in an embodiment, the measurement device 100 utilizes the sensor 2 to detect a change in an elastic wave based on the presence of the first substance as a change in an electrical signal. The sensor 2 may be produced by a known method, except for a polymer film 1 described below. In this case, the test information included in identification information may include information that is characteristic of a sensor utilizing an elastic wave, such as initial phase of an elastic wave and orientation of a substrate 22.

In the present embodiment, the measurement device 100 includes the sensor 2 including external terminals 21. The sensor 2 can be electrically connected to the control device 6, which controls the measurement device 100, via external terminals 21. That is, the sensor 2 and the control device 6 can input and output electrical signals to each other through the external terminals 21. The control device 6 can thus detect, for example, the first substance based on the electrical signal input from the sensor 2. For example, the control device 6 may calculate a concentration of the first substance contained in the sample. The control device 6 may identify the first substance, for example. The control device 6 and the external terminals 21 may be produced by known techniques. The configuration by which the sensor 2 and the control device 6 are electrically connected is not limited to the external terminals 21. For example, as long as the sensor 2 and the control device 6 can be electrically connected, the sensor 2 and the control device 6 do not need to be physically connected through terminals. For example, the sensor 2 and the control device 6 may be electrically connected with electromagnetic induction.

The sensor 2 may be a disposable cartridge. This makes washing of the sensor 2 after measurement unnecessary, and can exclude effects on a measurement result caused by insufficient washing.

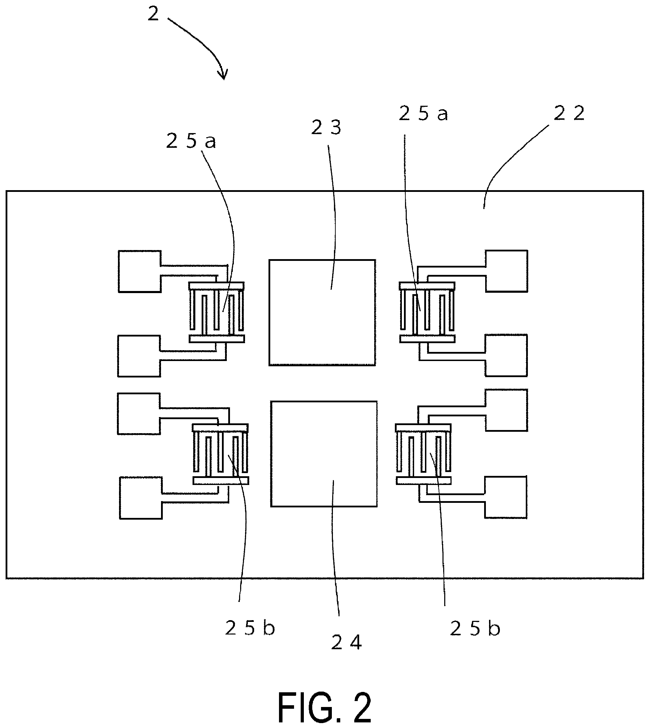

FIG. 2 illustrates a plan view of a sensor 2. The sensor 2 includes a substrate 22, a detector 23 arranged on a substrate 22, a reference 24, and a pair of first interdigital transducer (IDT) electrodes 25a provided in an arrangement sandwiching the detector 23 on the substrate 22, and a pair of second IDT electrodes 25b. The detector 23, the reference 24, the pair of first IDT electrodes 25a, and the pair of second IDT electrodes 25b may be arranged on the substrate 22.

### Substrate

The substrate 22 is, for example, a substrate with piezoelectricity. Specifically, the substrate 22 is, for example, a quartz substrate. The substrate 22 is not limited to a quartz substrate as long as the substrate can propagate an elastic wave. That is, the substrate 22 is only required to contain a freely chosen material that can propagate an elastic wave. For example, the substrate 22 may contain a metal such as gold, silver, copper, platinum, and aluminum, and single crystals with piezoelectricity such as lithium tantalate and quartz. The substrate 22 may be produced by a known technique.

### Detector

In the detector 23, a substance (second substance) being reactive with the first substance 5 is fixed. Thus, in the detector 23, the first substance contained in the sample can react with the fixed second substance. In the detector 23, a reaction between the first substance and the second substance changes the propagation characteristics of an elastic wave of the substrate 22. Specifically, in the detector 23, for example, a reaction between the first substance and the second substance changes the weight applied to the substrate 22 or the viscosity of a liquid that is in contact with a surface of the substrate 22. The degrees of these changes correlate the reaction amount between the first substance and the second substance. The characteristics of an elastic wave (e.g., phase, amplitude, or period) change upon propagation through the detector 23. The degree of change in characteristics correlates with, for example, the weight applied to the substrate 22 or the viscosity of a liquid that is in contact with a surface of the substrate 22. The sensor 2 can thus detect the first substance based on the change in characteristics of an elastic wave. Specifically, for example, the measurement device 100 can measure the concentration of a first substance contained in a sample. The detector 23 will be described in detail below.

The pair of first IDT electrodes 25a can generate elastic waves in between the pair of first IDT electrodes 25a. Among the generated elastic waves, an elastic wave propagating through a surface of the substrate 22 is also referred to as surface acoustic wave (SAW). The pair of first IDT electrodes 25a is only required to be in an arrangement sandwiching the detector 23 on the substrate 22. In an embodiment, in the measurement device 100, an electrical signal is input into one of the pair of first IDT electrodes 25a. The input electrical signal is converted into an elastic wave propagating toward the detector 23, and the converted elastic wave is sent from the first IDT electrode 25a. The sent elastic wave passes through the detector 23. The other first IDT electrode 25a can receive the elastic wave passed through the detector 23. The received elastic wave is converted into an electrical signal. The pair of first IDT electrodes 25a is only required to be formed of a metal material such as gold, chromium, or titanium. The pair of first IDT electrodes 25a may be electrodes each having a single layer containing a single material or may be electrodes each having multiple layers containing multiple materials.

The sensor 2 may include two or more of combinations of a detector 23 and a pair of first IDT electrodes 25a. In this case, for example, the measurement device 100 may detect different types of target substances with each of such combinations. The measurement device 100 may detect an identical type of target substance with multiple combinations and may compare detection results to each other, for example.

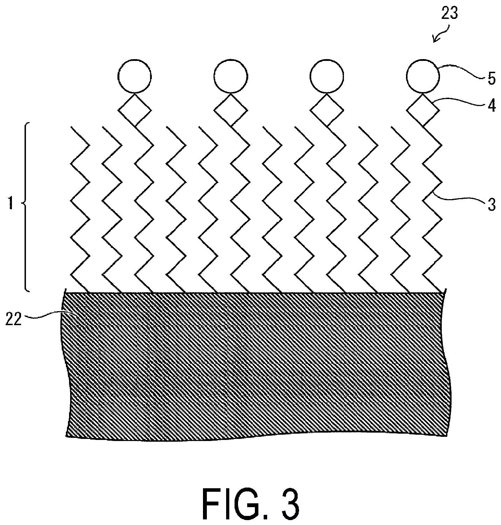

FIG. 3 is a schematic diagram illustrating a polymer film 1 included in a detector 23. In the detector 23, the polymer film 1 containing a polymer 3 is fixed on the substrate 22. On the polymer film 1, a substance (second substance 4) reacting with the first substance 5 is fixed.

The polymer film 1 is arranged to have high specific adsorption and low non-specific adsorption.

### First Substance and Second Substance

The reaction between the first substance 5 and the second substance 4 is only required to be a reaction that changes output of the sensor 2. The reaction may bond the first substance 5 and the second substance 4 by, for example, an oxidation-reduction reaction, an enzymatic reaction, an antigen-antibody reaction, chemisorption, intermolecular interaction, or interionic interaction. The reaction between the first substance 5 and the second substance 4 may form another substance (third substance) by an enzymatic reaction or the like.

The second substance 4 fixed to the detector 23 may be appropriately selected based on the first substance 5. For example, when the first substance 5 is a specific protein, DNA, or cell in a sample, an antibody, a peptide, an aptamer, or the like may be used as the second substance 4. For example, when the first substance 5 is an antibody, an antigen may be used as the second substance 4. For example, when the first substance 5 is a substrate, an enzyme may be used as the second substance 4.

The measurement device 100 may indirectly detect the first substance 5 that is the target. For example, a substance similar to the first substance 5 may be fixed to the detector 23 as a second substance 4. That is, for example, an antibody whose antigen is the first substance 5 may be reacted with the first substance 5 in advance, and the antibody that did not react may be reacted with the fixed second substance 4. In this case, for example, the measurement device 100 can indirectly calculate the amount of the first substance 5 based on the amount of the detected antibody if the amount of the antibody is known.

### Polymer

The Polymer 3 forms the polymer film 1. An example of the polymer 3 of an aspect of the present disclosure (hereinafter, abbreviated as "polymer of the present embodiment") will be described below.

In the present embodiment, the polymer is a copolymer containing a first structural unit represented by Formula (1) and a second structural unit represented by Formula (2). 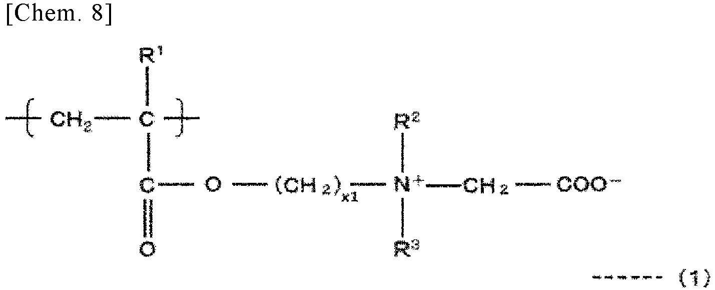 In Formula (1),
R¹ is a hydrogen atom or a methyl group;
R² and R³ are each independently a hydrogen atom or an alkyl group having from 1 to 4 carbons;
x1 is an integer of 1 to 4. 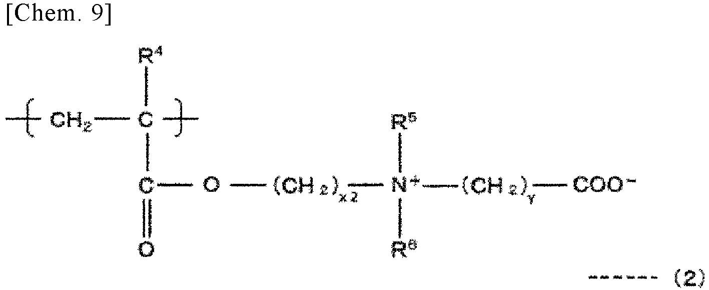
In Formula (2),
R⁴ is a hydrogen atom or a methyl group;
R⁵ and R⁶ are each independently a hydrogen atom or an alkyl group having from 1 to 4 carbons;
x2 is an integer of 1 to 4, and y is an integer of 3 to 7.

The first structural unit may be, for example, a structural unit derived from N-(carboxymethyl)-N,N-dimethyl-2-[(2-methyl-1-oxo-2-propen-1-yl)-oxy]ethanaminium (CBMA1).

The second structural unit may be, for example, a structural unit derived from a compound represented by Formula (8). 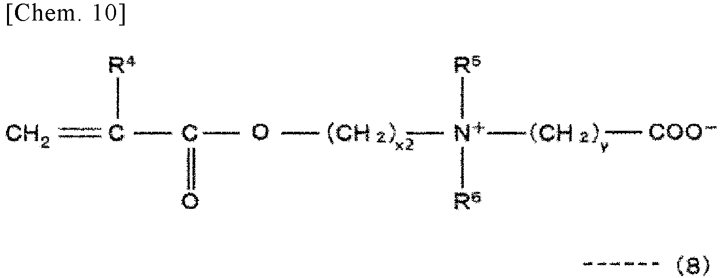 In Formula (8), R⁴, R⁵, R⁶, x2 and y are respectively synonymous with R⁴, R⁵, R⁶, x2, and y in Formula (2).

Note that, in the present embodiment, the polymer can enhance chemical stability of the polymer film because the polymer contains the first structural unit represented by Formula (1) that is chemically stable. Because, in the present embodiment, the polymer contains a carboxyl group in the second structural unit represented by Formula (2), the carboxyl group having excellent reactivity with the second substance 4, fixation of the second substance 4 is facilitated. Thus, in the present embodiment, the polymer having these two structural units can produce a polymer film by which fixation of the second substance 4 is facilitated and which is chemically stable. In the present embodiment, the polymer has high thermal stability and hydrolysis resistance.

In the present embodiment, when the polymer is used for a measurement device such as a biosensor, from the perspective of achieving both high chemical stability and suitable reactivity with the second substance 4, the proportion of the total content of the first structural unit and the second structural unit contained in the copolymer may be 80 mole% or more, 90 mole% or more, or 95 mole% or more.

In the present embodiment, from the perspective of reducing non-specific adsorption while high chemical stability is achieved, the polymer has the proportion of the first structural unit contained in the copolymer that may be 50 mole% or more, 60 mole% or more, or 80 mole% or more. The proportion may be 95 mole% or less, or 90 mole% or less.

In the present embodiment, from the perspectives of achieving suitable reactivity with the second substance 4 while non-specific adsorption is reduced, the polymer has the molar ratio of the second structural unit to the first structural unit contained in the copolymer (second structural unit/first structural unit) that may be 1 or less, 0.7 or less, or 0.3 or less. To exhibit reactivity with a substance interacting with a measurement target substance contained in a sample, the molar ratio may be 0.05 or more, or 0.1 or more.

In the present embodiment, from the perspective of achieving suitable reactivity with the second substance 4, the polymer has the proportion of the second structural unit contained in the copolymer that may be 5 mole% or more, 10 mole% or more, or 20 mole% or more. From the perspective of reducing non-specific adsorption, the proportion may be 50 mole% or less, 45 mole% or less, or 40 mole% or less.

In the present embodiment, the polymer may contain another structural unit different from the first structural unit and the second structural unit, provided, however, that the effect of the present disclosure is not impaired. For example, in the present embodiment, the polymer may further contain a third structural unit represented by Formula (3). 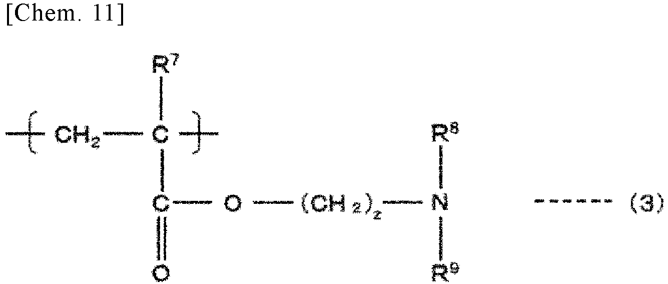 In Formula (3),
R⁷ is a hydrogen atom or a methyl group;
R⁸ and R⁹ are each independently an alkyl group having from 1 to 4 carbons;
z is an integer of 1 to 4.

The third structural unit may be derived from, for example, N,N-dimethylamino ethyl(meth)acrylate (DMAEMA), N,N-diethylamino ethyl(meth)acrylate, and N,N-diisopropylamino ethyl(meth)acrylate.

In the present embodiment, from the perspective of reducing non-specific adsorption, the polymer has the proportion of the third structural unit contained in the copolymer that may be 20 mole% or less, 10 mole% or less, or 5 mole% or less.

In the present embodiment, at least one terminal of the main chain of the polymer may contain a thiol group or a dithioester group from the perspective of ease in fixation of the polymer film to the substrate 22 (measurement substrate 12), or may be a thiol group.

In the present embodiment, the number average degree of polymerization of the polymer may be 25 or more, 50 or more, or 200 or more, from the perspective of film formation density. In the present embodiment, when the first substance 5 is a substance contained in urine, the polymer may have a high molecular weight. In the present embodiment, the polymer may be any of a random copolymer, a block copolymer, or a graft copolymer.

The copolymer containing the first structural unit and the second structural unit can be identified by a known organic analysis technique. For example, the copolymer may be identified by nuclear magnetic resonance (NMR). For example, the copolymer may be identified by liquid chromatography. For example, the copolymer may be identified by infrared spectroscopy. That is, in order to identify the copolymer, a device that can perform these techniques can be employed. As long as the copolymer can be identified, the identification technique and instrument are not limited to these techniques and instruments.

### Production Method

In the present embodiment, the method for producing the polymer can be performed by a known polymerization method such as radical polymerization. Next, an example of a method for producing the polymer of the present embodiment will be described.

In the present embodiment, an example of the method for producing the polymer includes synthesizing an intermediate (Steps 1 and 2), deprotecting the intermediate (Step 3), and substituting a thiol group (SH group) for a terminal of the polymer (Step 4). Steps will be described below.

### Steps 1 and 2: Synthesizing Intermediate

In this step, an intermediate is synthesized by reacting a polymer containing the third structural unit represented by Formula (3) (hereinafter, also abbreviated as "starting polymer") with a compound represented by Formula (4) and a compound represented by Formula (5). The intermediate is a polymer containing a structural unit represented by Formula (6) and a structural unit represented by Formula (7).

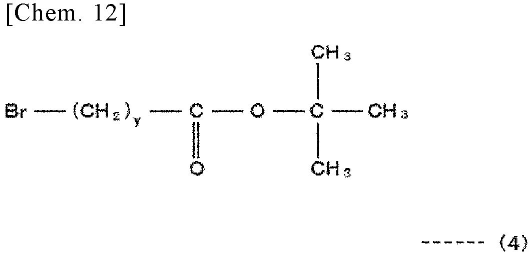

In Formula (4), y is an integer of 3 to 7.

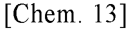

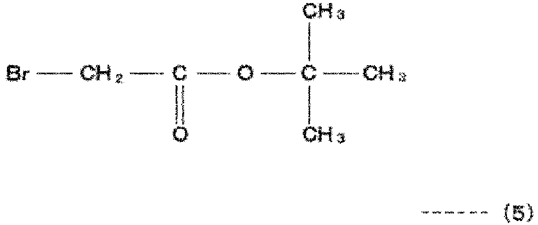

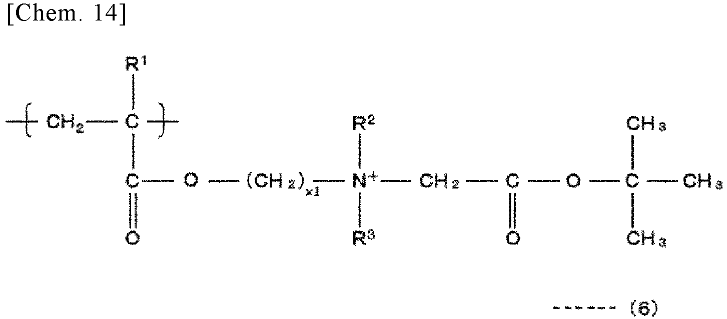

In Formula (6), R¹, R², R³, and x1 are respectively synonymous with R¹, R², R³, and x1 in Formula (1).

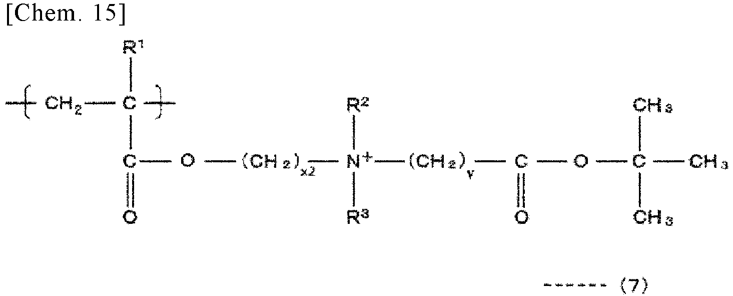

In Formula (7), R¹, R², R³, x2 and y are respectively synonymous with R¹, R², R³, x2, and y in Formula (2).

The starting polymer may be a commercially available product or a polymer produced by a synthesis. The proportion of the third structural unit contained in the starting polymer may be 80 mole% or more, and 90 mole% or more.

An example of the starting polymer is represented by Chemical Formula (9). 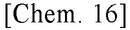 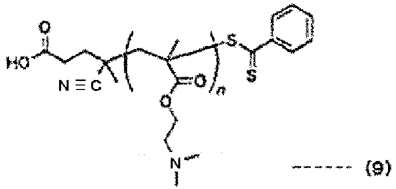 In Formula (9), n is an integer of 25 to 1000.

The starting polymer can be synthesized by reversible addition-fragmentation chain-transfer polymerization (RAFT polymerization). The starting polymer can be synthesized by a RAFT polymerization using a RAFT agent and a polymerization initiator, and using a monomer such as 2-(dimethylamino)ethyl methacrylate (DMAEMA) as a starting material. Substituting a thiol group (Step 4) described below can be performed simply and easily in a short period of time since the polymer produced by RAFT polymerization contains a dithioester group at a terminal.

Examples of the RAFT agent include dithioester, trithiocarbonate, dithiocarbamate, and dithiocarbonate. Examples of the polymerization initiator include persulfates, peroxides, and azo compounds. For the reaction solvent, reaction catalyst, reaction temperature, reaction time, and the like used for the RAFT polymerization, description of Examples, typical conditions for RAFT polymerization, and the like can be also used as reference.

From the perspective of reaction control, the starting polymer is reacted with the compound represented by Formula (4) and then reacted with the compound represented by Formula (5). From the perspective of control of composition ratio, the starting polymer may be reacted separately with the compound represented by Formula (4) and with the compound represented by Formula (5).

As the reaction condition of the starting polymer and the compound represented by Formula (4), from the perspective of reaction promotion, the reaction temperature may be 40°C or higher, and 60°C or higher, and may be a reflux temperature of the solvent. The reaction solvent is only required to be a polar solvent. Examples of the reaction solvent include dimethylformamide (DMF), acetonitrile, methanol, and ethanol. The reaction solvent may be ethanol. From the perspective of controlling copolymer proportion, the amount of the compound represented by Formula (4) added may be an amount calculated by multiplying an amount of the amino groups contained in the starting polymer by a copolymer proportion of the desired second structure. For example, to arrange the copolymer proportion of the second structure to 20%, the compound represented by Formula (4) may be added in an amount calculated by multiplying an amount of the amino groups contained in the starting polymer by 0.2. From the perspective of reacting all the compounds represented by Formula (4) with the amino groups of the starting polymer, the reaction time may be 6 hours or longer, 12 hours or longer, and 24 hours or longer.

For the reaction condition of a reaction product produced by reacting the starting polymer and the compound represented by Formula (4) and the compound represented by Formula (5), the reaction temperature may be 0°C or higher, 10°C or higher, and 20°C or higher, from the perspective of reaction promotion. The reaction solvent is only required to be a polar solvent. Examples of the reaction solvent include DMF, acetonitrile, methanol, and ethanol. The reaction solvent may be ethanol. For the amino groups contained in the reaction product produced by reacting the starting polymer and the compound represented by Formula (4), from the perspective of enhancing reaction proportion of the amino groups with the compound represented by Formula (5), the amount of the compound represented by Formula (5) added may be 1.1 times or more, 1.2 times or more, and 1.3 times or more, of the amount of the amino groups contained in the reaction product produced by reacting the starting polymer and the compound represented by Formula (4). Meanwhile, from the perspective of reducing an amount of waste, the amount of the compound represented by Formula (5) added may be three times or less, and twice or less, of the amount of the amino group contained in the reaction product produced by reacting the starting polymer and the compound represented by Formula (4). For the amino group contained in the reaction product produced by reacting the starting polymer and the compound represented by Formula (4), from the perspective of enhancing reaction proportion of the amino groups with the compound represented by Formula (5), the reaction time may be 1 hour or longer, 2 hours or longer, and 6 hours or longer. After the reaction is completed, impurities including an unreacted compound represented by Formula (5) may be removed by purification by reprecipitation.

### Step 3: Deprotecting Intermediate

In this step, a protecting group (tert-butyl group) of the intermediate produced in the step described above is removed (deprotecting). In the present embodiment, the polymer is produced by deprotecting the intermediate. For example, the protecting group can be removed by action of a strong acid such as trifluoroacetic acid (TFA). For the reaction solvent, reaction catalyst, reaction temperature, reaction time, and the like used for the deprotecting, description of Examples, typical conditions for deprotecting, and the like can be also used as reference.

An example of the polymer produced by this step is a polymer represented by Chemical Formula (10). 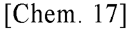 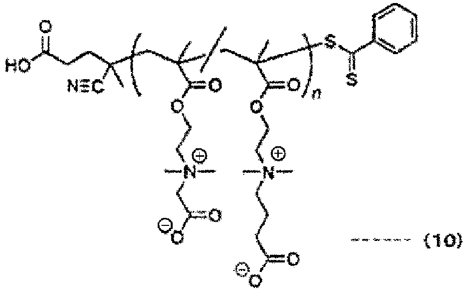 In Formula (10), n is an integer of 25 to 1000.

### Step 4: Substituting Thiol Group for Polymer Terminal

In this step, a terminal of the polymer main chain is replaced with a thiol group. Substitution of a thiol group for a terminal of the polymer main chain facilitates fixation of the polymer to the substrate 22 (measurement substrate 12). When the polymer containing the third structural unit represented by Formula (3) is produced by RAFT polymerization, a terminal of the polymer produced by Step 3 contains a dithioester group. By adding an ethanolamine to a solution containing the polymer, the dithioester group is replaced with the thiol group. For the reaction solvent, reaction catalyst, reaction temperature, reaction time, and the like used for the substituting a thiol group, description of Examples, typical conditions for the substituting a thiol group, and the like can be also used as reference.

An example of the polymer produced by this step is represented by Chemical Formula (11). 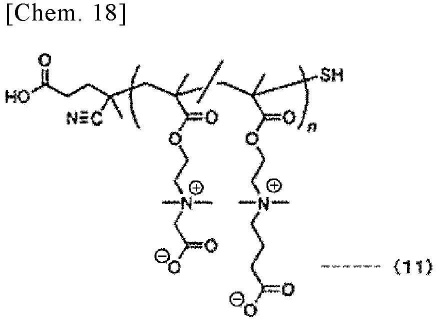 In Formula (11), n is an integer of 25 to 1000.

Examples of the method of fixing the polymer 3 to the substrate 22 include a method of applying a polymer solution, which is produced by dissolving the polymer 3 in a solvent, to the substrate 22 and drying, graft polymerization by radiation or ultraviolet radiation, and chemical reaction with a functional group of the substrate 22. By these methods, the polymer film 1 containing the polymer 3 is formed on the substrate 22.

Examples of a method of fixing the second substance 4 on the polymer 3 (polymer film 1) include a method of allowing the carboxyl group contained in the polymer 3 to covalently bond the second substance 4. For example, the polymer 3 is reacted with N-hydroxysuccinimide (NHS) and 1-ethyl-3-(3-dimethylaminopropyl)carbodiimide (EDC) (NHS/EDC activation). Then, the carboxyl group contained in the polymer 3 is replaced with an NHS ester group. By reacting this activated NHS ester group with the amino group of the second substance 4, the second substance 4 is fixed on the polymer 3 (polymer film 1). The NHS/EDC activation of the polymer 3 may be performed before the fixation to the substrate 22 or may be performed after the fixation to the substrate 22. In the present embodiment, because the polymer has high chemical stability, decomposition is less likely to occur due to the NHS/EDC activation. Thus, non-specific adsorption due to a decomposition product associated with the NHS/EDC activation can be reduced.

### Second Embodiment

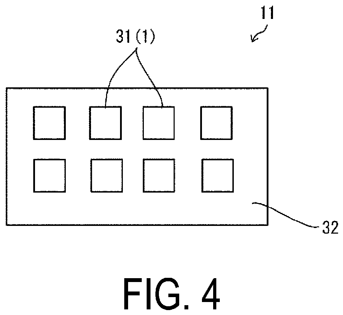

A measurement carrier according to an embodiment will be described below by using the drawings appropriately. For convenience of description, a member having the same function as that of a member described in the embodiments described above is denoted by the same reference sign, and description thereof will not be repeated. FIG. 4 illustrates an overall configuration of the measurement carrier 11 according to the present embodiment. Examples of the measurement carrier 11 include plates for an enzyme-linked immunosorbent assay (ELISA).

The measurement carrier 11 includes detection regions 31 and a non-detection region 32 on a surface of the measurement substrate 12. The detection regions 31 specifically captures a target substance (first substance 5) contained in a sample. The non-detection region 32 nonselectively adsorbs a blocking agent or the like. In the detection region 31, a polymer film 1 is fixed.

On the polymer film 1, in the same and/or similar manner of the polymer film 1 described in the first embodiment, the second substance 4 configured to react with the first substance 5 is fixed. In the non-detection region 32, a film adjusted to enhance the non-specific adsorption may be fixed.

### Example of Use of Measurement Carrier

First, the desired second substance 4 is fixed on the polymer film 1 of the detection region 31. A blocking agent is nonselectively adsorbed to the non-detection region 32. Then, a sample is brought into contact with the detection region 31 to react the first substance 5 with the second substance 4. The first substance 5 is a target substance contained in the sample. The reaction is detected by a detection reagent. Examples of the detection reagent include redox substances, fluorescent substances, enzymes, and coloring compounds.

### Measurement Substrate

Examples of the measurement substrate 12 include metals such as gold, silver, copper, platinum, and aluminum; plastics such as polyethylene and polypropylene; and inorganic materials such as titanium oxides, silica, glass, and ceramics. The measurement substrate 12 is not limited to these examples.

Examples of the shape of the measurement substrate 12 include plates, particles, microstructures, and microtiter plates. The shape of the measurement substrate 12 is not limited to these examples.

### Measurement Kit

The scope of the present disclosure includes a measurement kit including the second substance 4, the detection reagent, and the measurement substrate 12 to which the polymer film 1 is fixed. The second substance 4 may be fixed to the polymer film 1 in advance during production of the product or may be fixed by a user before measurement.

In the present embodiment, the measurement kit may include another reagent and an apparatus. For example, a component other than the second substance 4 and detection reagent described above may be included. A buffer or the like may be also included. In the measurement kit according to the present embodiment, multiple different reagents may be mixed in appropriate volumes and/or forms or may be provided in separate containers. In the present embodiment, the measurement kit may include instructions describing procedure and the like to detect the reaction between the first substance 5 and the second substance 4. Such instructions may be written or printed on paper or other medium or may be included in magnetic tape or electronic media such as disk or CD-ROM that can be read by a computer.

The invention according to the present disclosure has been described above based on the drawings and examples. However, the invention according to the present disclosure is not limited to each embodiment described above. That is, the invention according to the present disclosure can be variously varied within the scope indicated in the present disclosure, and an embodiment to be obtained by appropriately combining technical means disclosed in different embodiments is also included in the technical scope of the invention according to the present disclosure. In other words, it should be noted that a person skilled in the art can easily make various variant or variations based on the present disclosure. It should also be noted that these variant or variations are included within the scope of the present disclosure.

### EXAMPLES

In the following examples, % refers to mass% unless otherwise noted. In the following examples, CBMA1 refers to N-(carboxymethyl)-N,N-dimethyl-2-[(2-methyl-1-oxo-2-propen-1-yl)-oxy]ethanaminium. CBMA3 is a compound represented by Formula (8). In Formula (8), R⁴ to R⁶ are each independently a methyl group, x2 is 2, and y is 3.

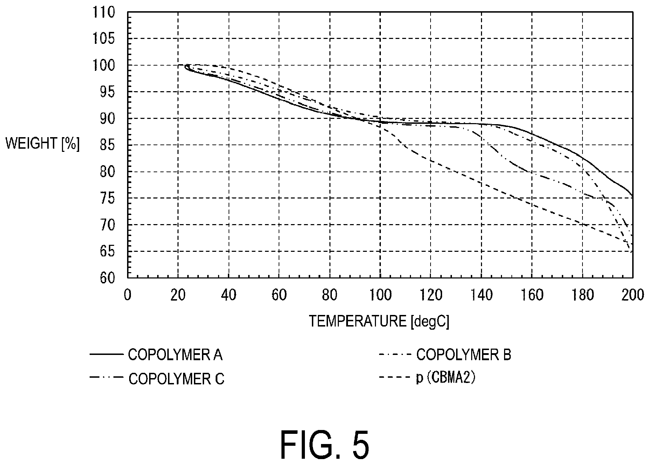

[Example 1] Evaluation of Thermal Stability of Copolymer For each of the three types of copolymers A to C described below and p(CBMA2), thermal stability was evaluated. Here, p(CBMA2) is a homopolymer of CBMA2 ((2-carboxy-N,N-dimethyl-N-[2'-(methacryloyl)oxyethyl]ethanaminium(3-[[2-(methacryloyloxy)ethyl]dimethylammonio]propionate))).
Copolymer A: Copolymer of CBMA1 and CBMA3, the copolymer having the ratio of CBMA1 to CBMA3 of 8:2 and the degree of polymerization of 50
Copolymer B: Copolymer of CBMA1 and CBMA3, the copolymer having the ratio of CBMA1 to CBMA3 of 8:2 and the degree of polymerization of 200
Copolymer C: Copolymer of CBMA1 and CBMA3, the copolymer having the ratio of CBMA1 to CBMA3 of 6:4 and the degree of polymerization of 50
Evaluation of the thermal stability was performed by using a thermal gravity-differential thermal analyzer under the following measurement conditions.
Measurement instrument: EVO-TG8120, available from Rigaku Corporation
Measurement conditions: Temperature elevation rate: 10°C/min
Measurement Temperature: Room temperature to 700°C
Atmosphere: Nitrogen
Measurement container: Pt
Reference: Al₂O₃
Sample amount: Approximately 4 mg
The evaluation results are shown in FIG. 5.

In FIG. 5, reductions in the weights of all the polymers until the temperature had increased to 100°C were due to vaporization of water adsorbed onto the polymer. The graph shows that the copolymers A to C had fixed weights from 100 to 130°C and exhibited high thermal stability. The graph shows that, among these copolymers, the copolymers A and B had fixed weights up to 150°C and exhibited particularly high thermal stability.

### [Example 2] Evaluation of Stability of Copolymer against NHS/EDC Activation

When the second substance 4 such as an antibody and an enzyme was fixed, the polymer (polymer film) was reacted with N-hydroxysuccinimide (NHS) and 1-ethyl-3-(3-dimethylaminopropyl)carbodiimide (EDC) (NHS/EDC activation). Stabilities against NHS/EDC activation of the following copolymer D and the homopolymer of CBMA2 were evaluated.

Copolymer D: Copolymer of CBMA1 and CBMA3, the copolymer having the ratio of CBMA1 to CBMA3 of 8:2 and the degree of polymerization of 100

Powder of each of the polymers was dissolved in a mixed solution of 0.2 mol/L of NHS, 0.3 mol/L of EDC·HCl, and 37.5 mmol/L of HCl, provided that the concentration of the polymer was 10 mg/mL. Then, the mixture was activated for 10 minutes. The amounts of -N⁺(CH₃)₂- and -N(CH₃)₂ in the polymer before and after the NHS/EDC activation were measured. The results are shown in Table 1. In Table 1, % is mole%. The numerical values in Table 1 are proportions taking the content of - N⁺(CH₃)₂- and -N(CH₃)₂ in the polymer as 100 mole%. The NHS/EDC activation was performed for three times, and the numerical values in Table 1 are the numerical values after performing the three NHS/EDC activations.

**[Table 1]**

| | Before NHS/EDC activation | | After NHS/EDC activation | |
|---|---|---|---|---|
| | -N⁺(CH₃)₂- | -N(CH₃)₂ | -N⁺(CH₃)₂- | -N(CH₃)₂ |
| Copolymer D | 94% | 6% | 94% | 6% |
| p(CBMA2) | 96.2% | 3.8% | 58.2% | 41.8% |

As shown in Table 1, for the copolymer D, the amount of -N⁺(CH₃)₂- did not change before and after the NHS/EDC activation. On the other hand, for the homopolymer of CBMA2, the amount of -N⁺(CH₃)₂- decreased and the amount of - N(CH₃)₂ increased after the NHS/EDC activation. These results indicate that the copolymer D was less likely to cause decomposition by the NHS/EDC activation.

[Example 3] Preparation of Polymer (Copolymer) Having Ratio of CBMA1 to CBMA3 of 8:2

A copolymer was prepared according to the following synthesis scheme.

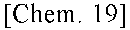

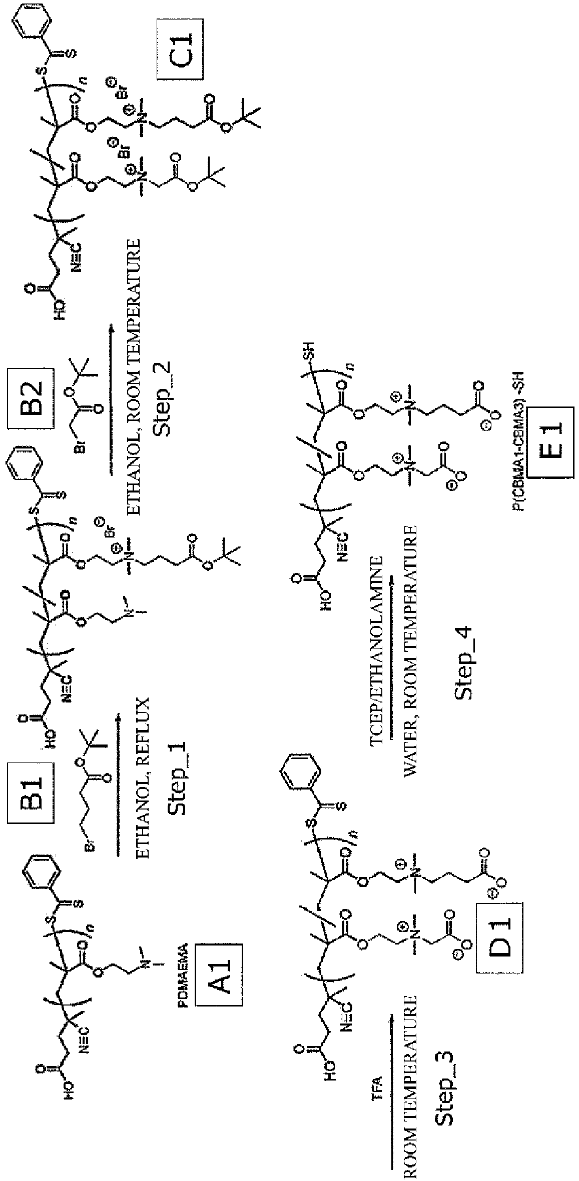

### 1. Synthesis of Polymer A1

A polymer A1 was synthesized by RAFT polymerization. As monomers, 500 mmol/L of N,N-dimethylaminoethyl methacrylate (DMAEMA), 3 mmol/L of 2,2'-azobisisobutyronitrile (AIBN), 10 mmol/L of 4-cyano-4-(thiobenzoyl)sulfanylpentanoic acid (CTA) were dissolved in toluene, and reacted at 60°C for 24 hours under deoxidation. After the reaction, a mixed solvent of hexane and isopropyl alcohol (IPA) (hexane/IPA = 9/1 (volume ratio)) was charged. The precipitates were filtered and dried, and thus a polymer A1 (n = 50) was produced. The degree of polymerization of the produced polymer A1 was measured by NMR spectroscopy. The degree of polymerization was calculated based on the proportions of the area of peak from 7.50 ppm to 8.50 ppm originated from a benzene ring at a terminal and the area of peak around 2.30 ppm originated from protons attached to a methyl group of a tertiary amine in 1H-NMR spectrum produced by the following measurement conditions.
Measurement instrument: ADVANCE III HD 400, available from Bruker BioSpin K.K.
Measurement conditions: Solvent: Heavy water
Temperature: 30°C
Reference: H₂O peak at 4.70 ppm
Accumulation: 300 times

Polymers A1 having the degree of polymerization (n) of 25, 100, or 200 were produced. Table 2 shows the concentrations of DMAEMA, AIBN, and CTA used for the synthesis of the polymers A1 having n of 25, 50, 100, or 200.

**[Table 2]**

| n | DMAEMA (mmol/L) | AIBN (mmol/L) | CTA (mmol/L) |
|---|---|---|---|
| 25 | 500 | 6 | 20 |
| 50 | 500 | 3 | 10 |
| 100 | 500 | 1.5 | 5 |
| 200 | 500 | 0.75 | 2.5 |

### 2. Reaction between Polymer A1 and Compound B1 (Step_1)

5.0 mmol of monomer repeating unit of the polymer A1 was dissolved in 5 mL of ethanol. In this solution, 1.0 mmol of B1 was added and reacted for 18 hours under reflux.

### 3. Reaction with Compound B2 (Step_2)

In the solution after the reaction of Step_1, 4.5 mmol of B2 was added and reacted at room temperature for 8 hours to 10 hours. The mixture was then added to a mixed solvent of hexane/isopropyl alcohol = 9/1 (volume ratio), and the produced precipitate was recovered and dried. Thus, a solid of a polymer C1 was produced.

### 4. Elimination of Protecting Group (Step_3)

The solid of the polymer C1 produced in Step_2 was dissolved in TFA, provided that the concentration of the monomer repeating unit in the polymer C1 was 0.75 mol/L. The mixture was reacted at room temperature for 8 hours. The solvent was removed after the reaction, and a dried solid of a polymer F1 was produced.

### 5. Substituting SH Group for Polymer Terminal (Step_4)

The polymer F1 produced in Step_3 was dissolved in water, provided that the concentration of the polymer F1 in this solution was 50 mg/mL. In this solution, ethanolamine and tris(2-carboxyethyl)phosphine hydrochloride (TCEP) were added, provided that the amount of ethanolamine was 30 times of the amount of the polymer in mole and the amount of TCEP was equal to the amount of the polymer in mole. The mixture was reacted at room temperature for 1 hour. After removal of the solvent, the produced solid was dissolved in methanol and added in tetrahydrofuran, and the produced precipitate was recovered. The produced precipitate was dissolved in water. The produced aqueous solution was filled into a bag made of a semipermeable membrane. The bag containing the produced aqueous solution was subjected to immersion in an excessive amount of water to remove impurities by dialysis. After dialysis, the aqueous solution in the bag formed by using the semipermeable membrane was dried by freeze-drying, and thus a solid of a polymer E1 was produced. As a result of analyzing the produced polymer by NMR spectroscopy, the ratio of the CBMA1 to the CBMA3 was 8:2 (CBMA1/CBMA3 = 8/2). The analysis conditions were as follows.
Measurement instrument: ADVANCE III HD 400, available from Bruker BioSpin K.K.
Measurement conditions: Solvent: Heavy water
Temperature: 30°C
Reference: H₂O peak at 4.70 ppm
Accumulation: 300 times

Calculation Method of Ratio of CBMA1 to CBMA3:
The ratio of the CBMA1 to the CBMA3 was calculated based on the ratio of the peak area from 3.30 ppm to 3.35 ppm originated from protons of a methyl group of a quaternary amine in the CBMA1 unit to the peak area from 3.20 ppm to 3.25 ppm originated from protons of a methyl group of a quaternary amine in the CBMA3 unit.

### [Example 4] Preparation of Polymer (Copolymer) Having Ratio of CBMA1 to CBMA3 of 6:4

A copolymer (polymer E1) was prepared in accordance with the synthesis scheme identical to that of Example 3 except for changing the added amount of the compound B1 to 2 mmol in "2. Reaction between Polymer A1 and Compound B1 (Step_1)" and changing the added amount of the compound B2 to 3.5 mmol in "3. Reaction with Compound B2 (Step_2)". As a result of analyzing the produced polymer by NMR spectroscopy, the ratio of the CBMA1 to the CBMA3 was 6:4 (CBMA1/CBMA3 = 6/4).

### [Example 5] Relationship between Degree of Polymerization of Copolymer and Amount of Non-Specific Adsorption

The relationship between the degree of polymerization of a copolymer which is a copolymer of the CBMA1 and the CBMA3 and in which the ratio of the CBMA1 to the CBMA3 was 8:2 (collectively called copolymer E) and the amount of non-specific adsorption was determined. Specifically, polymer films made of copolymers E having different degrees of polymerization were brought into contact with urine, which was a sample, and the amounts of non-specific adsorption of a urine component to the polymer films were measured in the following conditions.
Measurement instrument: Biacore X100, available from GE Healthcare
Measurement conditions: Running buffer solution: HBS-P
Temperature: 25°C
Flow rate: 10 µL/min
Sample contact time: 9 min (sample injection amount: 90 µL)

The amount of non-specific adsorption was determined using an SPR chip having a surface on which a polymer film was formed, provided that the amount of non-specific adsorption was a difference between an SPR signal value before the sample injection and an SPR signal value after the sample was injected and the running buffer solution flowed for 9 minutes.

Production conditions of SPR chip on which polymer film was formed: SIA kit Au (available from GE Healthcare) was washed with a piranha solution, then immersed in a 50% methanol solution, in which a polymer was dissolved to form a concentration of 5 mg/mL, for 18 hours, and thus a polymer film was formed. The chip was then washed with Milli-Q and dried in a nitrogen stream.

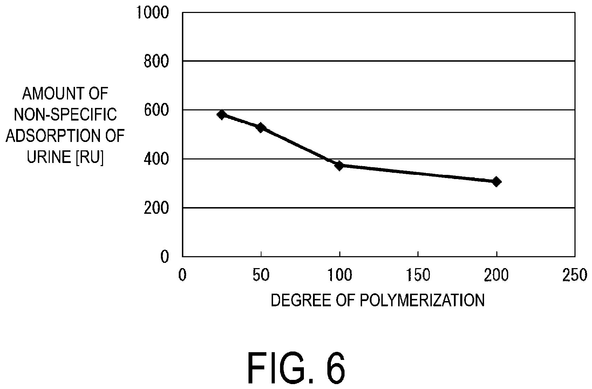

The results are shown in FIG. 6. As shown in FIG. 6, as the degree of polymerization of the copolymer E was higher, the amount of non-specific adsorption of the urine component decreased. This result shows that, to reduce the amount of non-specific adsorption of the polymer film made of the copolymer E of the present example, the degree of polymerization of the copolymer E needs to be increased.

### [Example 6] Relationship between Proportion of CBMA1 in Copolymer and Amount of Immobilized Antibody or Amount of Non-Specific Adsorption of Serum

The following four polymers were used to evaluate the relationship between a proportion of CBMA1 in the copolymer and an amount of immobilized antibody or an amount of non-specific adsorption of a component contained in serum (amount of non-specific adsorption of serum). Each of the four polymers had the degree of polymerization of 200.
(1) Homopolymer of CBMA1 (proportion of CBMA1 was 100%)
(2) Homopolymer of CBMA3 (proportion of CBMA1 was 0%)
(3) Copolymer E prepared in Example 4 (proportion of CBMA1 was 60%)
(4) Copolymer used in Example 5 (proportion of CBMA1 was 80%)

The amount of immobilized antibody was measured by an SPR instrument. Also, the amount of non-specific adsorption of serum was measured in the same and/or similar procedure as in Example 5 except for changing the sample from urine to serum.
Measurement instrument: Biacore X100, available from GE Healthcare
Measurement conditions: Running buffer solution: HBS-P
Temperature: 25°C
Flow rate: 10 µL/min

Antibody solution contact time: 9 min (antibody solution injection amount: 90 µL) The amount of immobilized antibody was determined using an SPR chip having a surface on which the polymer film was formed and having undergone activation treatment, provided that the amount of immobilized antibody was a difference between an SPR signal value before the antibody solution injection and an SPR signal value after the antibody was injected and a 10 mM carbonic acid buffer solution (pH = 9) containing 0.3 M of sodium chloride was flowed for 15 minutes.
- Production conditions of SPR chip on which polymer film was formed: SIA kit Au (available from GE Healthcare) was washed with a piranha solution, then immersed in a 50% methanol solution, in which a polymer was dissolved to form a concentration of 5 mg/mL, for 18 hours, and thus a polymer film was formed. The chip was then washed with Milli-Q and dried in a nitrogen stream.
- Activation treatment conditions: On an SPR chip on which the polymer film was formed, a mixed solution of 0.2 mol/L of NHS, 0.3 mol/L of EDC·HCl, and 37.5 mmol/L of HCl was added dropwise, and activation treatment was performed for 10 minutes. This solution was removed 10 minutes later, then washed with Milli-Q for 20 seconds, and dried in a nitrogen stream.

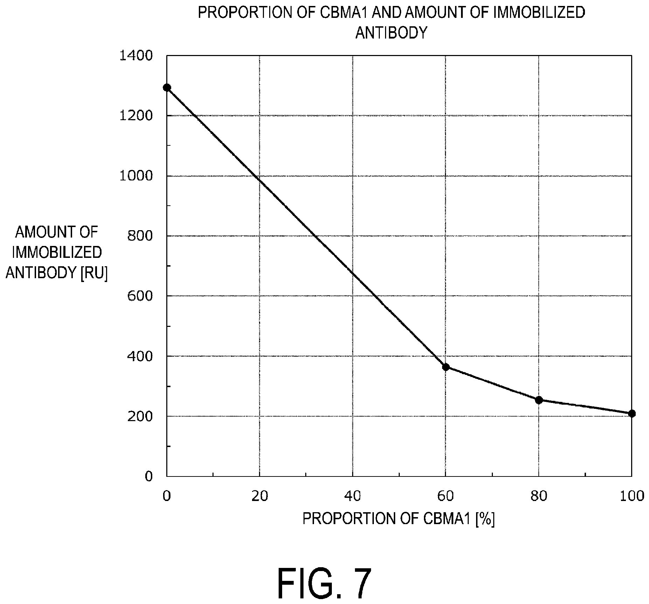

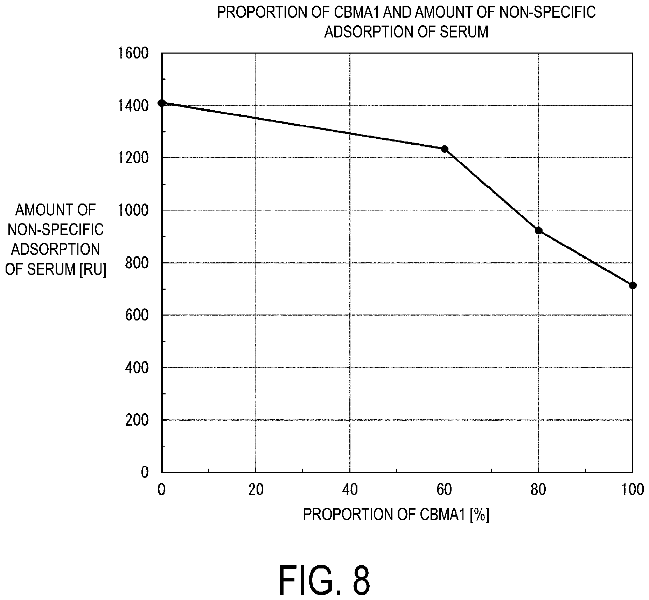

The measurement result of the amounts of immobilized antibody of the polymers is shown in FIG. 7, and the measurement result of the amounts of non-specific adsorption of serum is shown in FIG. 8. Table 3 is a table summarizing the results of Example 6.

**[Table 3]**

| Proportion of CBMA1 (%) | Amount of immobilized antibody | Amount of non-specific adsorption of serum | Overall evaluation |
|---|---|---|---|
| 100 | C | A | B |
| 80 | B | B | A |
| 60 | B | B | A |
| 0 | A | C | B |

In Table 3, "proportion of CBMA1" refers to a proportion of CBMA1 contained in a polymer. The evaluation items had the following criteria.

### Evaluation Criteria for Amount of Immobilized Antibody

A: Amount of immobilized antibody was high (more than 1000 RU).
B: Amount of immobilized antibody was adequate for use in a measurement device or a polymer film of a measurement carrier (250 to 1000 RU).
C: Amount of immobilized antibody was not adequate for use in a measurement device or a polymer film of a measurement carrier (less than 250 RU).

### Evaluation Criteria for Amount of Non-Specific Adsorption of Serum

A: Amount of non-specific adsorption of serum was low (less than 800 RU).
B: Amount of non-specific adsorption of serum was acceptable for use in a measurement device or a polymer film of a measurement carrier (800 to 1300 RU).
C: Amount of non-specific adsorption of serum was high (more than 1300 RU).

### Overall Evaluation

A: Evaluation items of "amount of immobilized antibody" and "amount of non-specific adsorption of serum" were not evaluated as "C", and use for a measurement device or for a polymer film of a measurement carrier was suitable.
B: An evaluation item of "amount of immobilized antibody" or "amount of non-specific adsorption of serum" was evaluated as "C", and use for a measurement device or for a polymer film of a measurement carrier was not suitable.

It was found that the polymer having the proportion of CBMA1 of 60% and the polymer having the proportion of CBMA1 of 80% received overall evaluation of A as shown in Table 3 and were suitable for use for a measurement device or for a polymer film of a measurement carrier.

On the other hand, the homopolymer of CBMA1 (polymer having the proportion of CBMA1 of 100%) had a low amount of immobilized antibody while the amount of non-specific adsorption of serum was reduced, and thus overall evaluation was B. The homopolymer of CBMA3 (polymer having the proportion of CBMA1 of 0%) had a high amount of non-specific adsorption of serum while the amount of immobilized antibody was high, and thus overall evaluation was B.

According to Examples described above, high chemical stability can be achieved by the copolymer containing the first structural unit represented by Formula (1) above and the second structural unit represented by Formula (2) above. Thus, it was shown that a polymer film achieving easier handling compared to known materials and being capable of fixing a substance interacting with a measurement target substance contained in a sample can be produced.

### INDUSTRIAL APPLICABILITY

The present disclosure can be used for a measurement device including a detector to which a polymer film is formed, and for a measurement plate.

### REFERENCE SIGNS

1 Polymer film
2 Sensor
3 Polymer
4 Second substance
5 First substance
6 Control device
11 Measurement carrier
12 Measurement substrate
21 External terminal
22 Substrate
23 Detector
24 Reference
25a First IDT electrode
25b Second IDT electrode
26 Channel member
27 Supply port
28 Discharge port
31 Detection region
32 Non-detection region
100 Measurement device

## Claims

1. A copolymer comprising:
a first structural unit represented by Formula (1); and
a second structural unit represented by Formula (2): 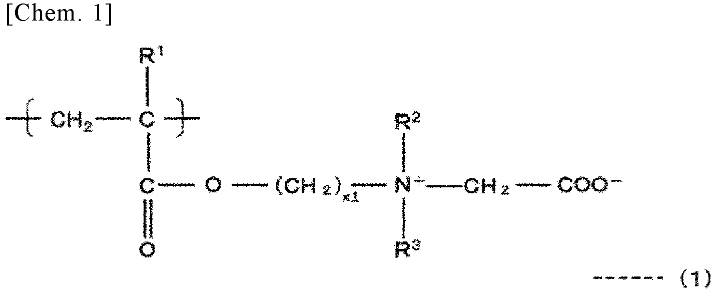 where
R¹ is a hydrogen atom or a methyl group,
R² and R³ are each independently a hydrogen atom or an alkyl group having from 1 to 4 carbons, and
x1 is an integer of 1 to 4, and 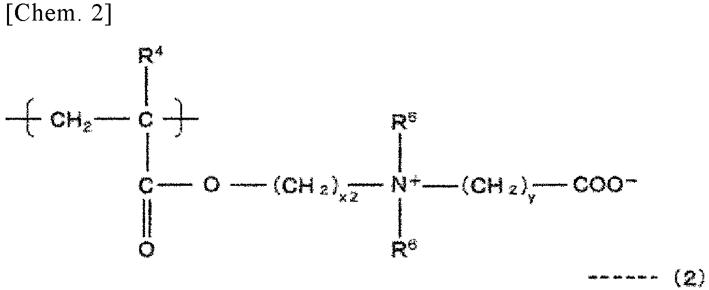 where
R⁴ is a hydrogen atom or a methyl group,
R⁵ and R⁶ are each independently a hydrogen atom or an alkyl group having from 1 to 4 carbons,
x2 is an integer of 1 to 4, and y is an integer of 3 to 7.

2. The copolymer according to claim 1, wherein a proportion of a total content of the first structural unit and the second structural unit contained in the copolymer is 80 mole% or more.

3. The copolymer according to claim 1 or 2, wherein a proportion of the first structural unit contained in the copolymer is not less than 50 mole% and no more than 95 mole%.

4. The copolymer according to any one of claims 1 to 3, wherein a proportion of the second structural unit contained in the copolymer is not less than 5 mole% and not more than 50 mole%.

5. The copolymer according to any one of claims 1 to 4, wherein a molar ratio of the second structural unit to the first structural unit (the second structural unit/the first structural unit) contained in the copolymer is not more than 1.

6. The copolymer according to any one of claims 1 to 5, the copolymer further comprising a third structural unit represented by Formula (3): 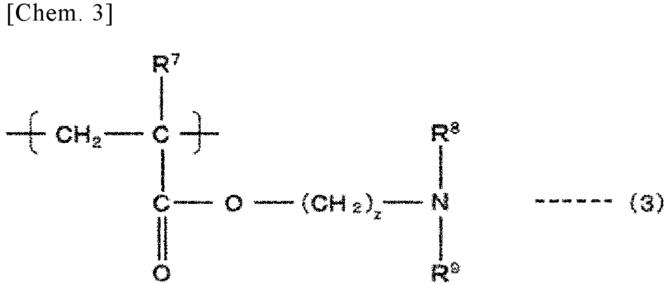 where
R⁷ is a hydrogen atom or a methyl group,
R⁸ and R⁹ are each independently an alkyl group having from 1 to 4 carbons, and z is an integer of 1 to 4.

7. The copolymer according to any one of claims 1 to 6, wherein at least one of terminals of the copolymer comprises a thiol group or a dithioester group.

8. A measurement device comprising a polymer film containing the copolymer according to any one of claims 1 to 7.

9. A measurement carrier comprising a polymer film containing the copolymer according to any one of claims 1 to 7.

10. A method for producing a copolymer comprising a first structural unit represented by Formula (1) and a second structural unit represented by Formula (2): 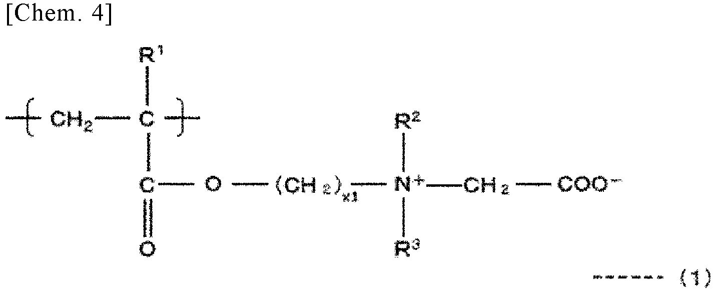 where
R¹ is a hydrogen atom or a methyl group,
R² and R³ are each independently a hydrogen atom or an alkyl group having from 1 to 4 carbons, and
x1 is an integer of 1 to 4, and 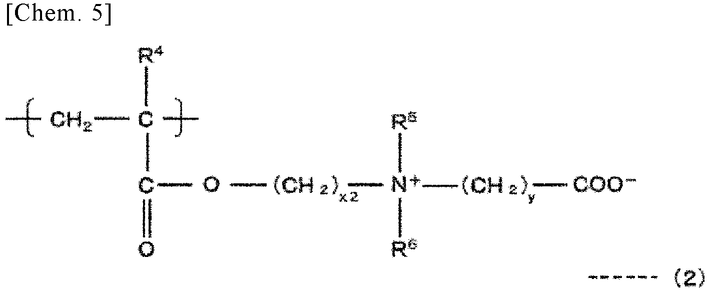 where
R⁴ is a hydrogen atom or a methyl group,
R⁵ and R⁶ are each independently a hydrogen atom or an alkyl group having from 1 to 4 carbons,
x2 is an integer of 1 to 4, and y is an integer of 3 to 7,
the method comprising:
reacting a polymer containing a structural unit represented by Formula (3) with a compound represented by Formula (4) and a compound represented by Formula (5), 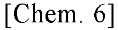 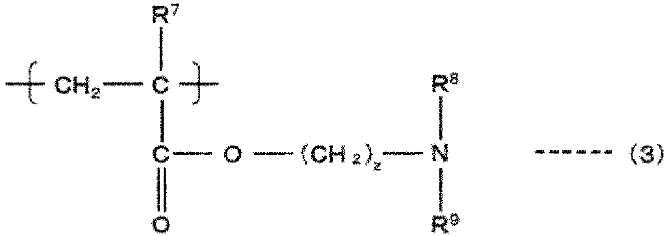 where
R⁷ is a hydrogen atom or a methyl group,
R⁸ and R⁹ are each independently an alkyl group having from 1 to 4 carbons, and
z is an integer of 1 to 4, 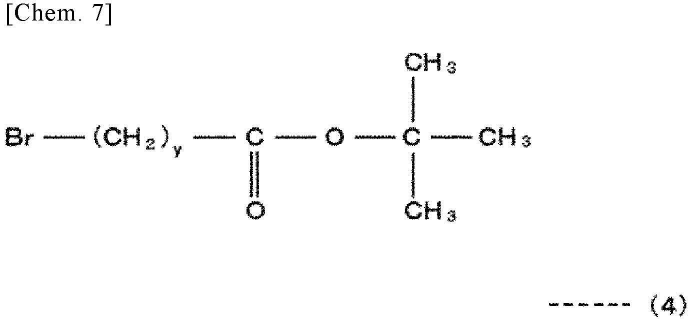
where y is an integer of 3 to 7, and 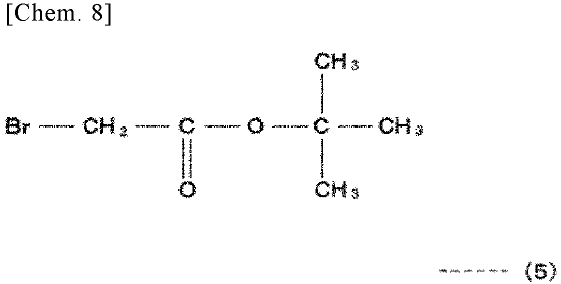 wherein the reacting comprises reacting the polymer containing the structural unit represented by Formula (3) with the compound represented by Formula (4) and then with the compound represented by Formula (5).
